# EUROPÄISCHE PATENTSCHRIFT

(11) **EP 3 175 462 B1**
(45) Veröffentlichungstag und Bekanntmachung des Hinweises auf die Patenterteilung: **29.06.2022**
(21) Anmeldenummer: 15763532.7
(22) Anmeldetag: 07.09.2015
(51) Int. Cl.: H01B 3/40, H02K 3/40, H02K 3/30, H02K 3/493, H02K 15/12

(54) **ISOLATIONSSYSTEM FÜR ELEKTRISCHE MASCHINEN**
INSULATION SYSTEM FOR ELECTRICAL MACHINES
SYSTÈME D'ISOLATION POUR MACHINE ÉLECTRIQUES

(30) Priorität: 30.09.2014 DE 102014219844
(43) Veröffentlichungstag der Anmeldung: 07.06.2017
(73) Patentinhaber: Siemens Aktiengesellschaft, 80333 München (DE)
(72) Erfinder: HUBER, Jürgen, 91058 Erlangen (DE); KLAUSSNER, Bernhard, 90408 Nürnberg (DE); SCHIRM, Dieter, 96149 Breitengüßbach (DE); ÜBLER, Matthias, 92289 Ursensollen (DE)
(86) Internationale Anmeldenummer: PCT/EP2015/070341
(87) Internationale Veröffentlichungsnummer: WO 2016/050450

(56) Entgegenhaltungen:
- EP-A1- 0 379 464
- EP-A1- 2 763 142
- WO-A2-2014/118077
- DE-A1-102013 201 054
- US-A- 4 336 363
- US-A1- 2009 230 360

## Beschreibung

### Isolationssystem für elektrische Maschinen

Die Erfindung betrifft ein Isolationssystem für elektrische Maschinen, insbesondere im Hochspannungsbereich.

Elektrische Maschinen, insbesondere rotierende elektrische Maschinen, beinhalten eine elektrische Wicklung innerhalb eines Blechpakets. Diese umfasst elektrische Leiter (die ggf. bereits mit einer Primärisolation versehen sind) und festen Isolationswerkstoffen als Hauptisolation. Ohne weitere Maßnahmen gibt es zwischen dem Blechpaket, den Leitern und der Hauptisolation keine kompakte Verbindung, so dass Spalten und Hohlräume an der Tagesordnung sind. Bei Betrieb unter atmosphärischen Bedingungen wären diese Bereiche mit Luft gefüllt. Insbesondere bei Anwendungen im Hochspannungsbereich ist dies nicht zulässig, da elektrische Teilentladungen die Isolation in kürzester Zeit zerstören würden. Dies führt zum Ausfall der elektrischen Maschine.

Um die Spalten und Hohlräume zu vermeiden, wird in der Regel die Wicklung mit einem Tränkharz oder einem Tränklack imprägniert. Das Tränkharz füllt die Hohlräume und Spalten und dringt, soweit Porosität besteht in die festen porösen Materialien ein. Einige feste Isolationswerkstoffe wie Glimmerbänder, Isolationspapiere oder Vliesstoffe sind dabei extra porös ausgeführt, damit die Tränkharzaufnahme erfolgt.

Nach dem Stand der Technik werden Mischungen aus EpoxidHarzen und flüssigen, cycloaliphatischen Säureanhydriden zur Imprägnierung eingesetzt. Die Säureanhydride dienen dabei als Härter und setzen gleichzeitig die Viskosität herab, was einer zügigen und vollständigen Imprägnierung zu Gute kommt. DE 10 2013 201054 beschreibt Isolationssysteme mit einem härtbaren Polymer. Die Polymerisation ist nicht weiter definiert.

Wegen der nicht vollständig gegebenen Unbedenklichkeit der flüssigen, cycloaliphatischen Säureanhydride sind Sicherheitsmaßnahmen beim Umgang mit der Chemikalie notwendig.

Aufgabe der vorliegenden Erfindung ist es daher, einen Ersatz für die Säureanhydride als Härter zu schaffen, der auch für die flüssige Imprägnierung von Wicklungen geeignet ist.

Diese Aufgabe wird vorliegend durch den Gegenstand der Erfindung, wie er in den Ansprüchen und der Beschreibung offenbart ist, gelöst.

Dementsprechend ist Gegenstand der vorliegenden Erfindung ein Isolationssystem für elektrische Maschinen einen festen und porösen Isolationswerkstoff und ein katalytisch und/oder thermisch härtbares Tränkharz umfassend, wobei das Tränkharz säureanhydridfrei ist und ein beliebiges Reaktionsharz mit Oxiranfunktionalitäten oder einer Mischung verschiedener Reaktionsharze mit Oxiranfunktionalitäten umfasst und im Isolationssystem mindestens eine thermisch aktivierbare und/oder gekapselte Härterkomponente vorliegt, die Härterkomponente ionische, also kationische oder anionische Polymerisation des Reaktionsharzes induziert und die Härterkomponente ausgewählt ist aus der Gruppe folgender Verbindungen: organische Salze, wie organische Ammonium-, Sulphonium-, Phosphonium-, Iodonium-, oder Imidazolium Salze, Metallkomplex-Verbindungen, tertiäre Amine, Imidazol-Verbindungen und/oder organische Heterocyclen.

Nach einer vorteilhaften Ausführungsform ist die mindestens eine Härterkomponente zumindest teilweise in den Poren des festen Isolationswerkstoffes deponiert.

Nach einer weiteren vorteilhaften Ausführungsform ist die mindestens eine Härterkomponente zumindest teilweise thermisch aktivierbar und im Tränkharz gelöst.

Die Härterkomponenten stellen Verbindungen dar, die ionische, also kationische oder anionische Polymerisation des Reaktionsharzes induzieren.

Nach einer vorteilhaften Ausführungsform umfasst das Tränkharzsystem einen Verdünner, wodurch die Rheologie vorteilhaft beeinflusst wird, insbesondere auch eine Viskosität von kleiner 100 mPas, bevorzugt kleiner 50mPas und besonders bevorzugt kleiner 35 mPas bei 65°C einstellbar ist.

Beispielsweise werden als Verdünner cyclische organische Carbonate oder deren Mischungen eingesetzt. Beispielsweise kommt Propylencarbonat oder Butylencarbonat zum Einsatz. Andererseits kommen cyclische Ether und/oder Oxetangruppenhaltige Verbindungen wie Di-oxetanyl-ether als Reaktivverdünner zum Einsatz, schließlich können auch Diole und/oder Polyole oder deren Mischungen als Reaktivverdünner zum Einsatz kommen.

Beispielhaft für letztere Verbindungen seien Polyethylenglycol- und Polypropylenlgycol-Verbindungen benannt. Die genannten Beispiele für Reaktivverdünner können in beliebigen Mischungen eingesetzt werden. Vorteilhafterweise wird der Reaktivverdünner in einer Menge zwischen 0,01 und 50 Gew%, bevorzugt zwischen 0,01 und 10 Gew% eingesetzt.

Als Härterkomponenten für die kationische Härtung werden organische Salze, wie organische Ammonium-, Sulphonium-, Phosphonium-, Iodonium-, oder Imidazolium Salze, sowie organische Heterocyclen und beliebige Mischungen der vorgenannten Verbindungen eingesetzt.

Als Härterkomponenten für die anionische Härtung werden tertiäre Amine oder Imidazol-Verbindungen eingesetzt werden. Als Härterkomponenten für die anionische oder kationische Härtung werden Metall-Komplex-Verbindungen eingesetzt werden.

Nach einer vorteilhaften Ausführungsform liegt die Anspringtemperatur oder die Öffnungstemperatur für die Verkapselung oder für die Loslösung der Härterkomponente aus dem porösen Feststoff im Bereich von 35°C und 95°C insbesondere im Bereich von 50°C und 80°C.

Bevorzugt liegt die Anspringtemperatur oder die Öffnungstemperatur der Verkapselung der im Tränkharz verwendeten Härterkomponente um 15°C höher als die des im porösen Isolationswerkstoff verwendeten Härtungskatalysators.

Nach einer vorteilhaften Ausführungsform sind im Tränkharz noch verschiedene Nanopartikel und/oder Mischungen von Nanopartikel enthalten.

Nach einer weiteren Ausführungsform sind dem Tränkharz noch anorganische und/oder organische mikroskalige Füllstoffe oder Füllstoffmischungen zugesetzt.

Das Isolationssystem eignet sich für den Einsatz in elektrischen Spulen ganz allgemein.

Die Erfindung betrifft ein Tränkharz für elektrische Maschinen, insbesondere für rotierende elektrische Maschinen und Hochspannungsanwendungen unter Ausschluss von sensibilisierenden Säureanhydriden.

Das System zeichnet sich durch folgende Vorteile aus:
- Niedrige Prozessviskositäten durch thermisch unterschiedlich ansteuerbare Katalysatoren, die ein breites Verarbeitungs-Temperaturfenster ermöglichen.
- Hohe Lagerstabilität durch Verwendung von einem Katalysator im Tränkharz und einem Katalysator im porösen Isolationswerkstoff mit unterschiedlichen Ansprechverhalten.
- Hohe Lagerstabilitäten bei gleichzeitig hoher Reaktivität durch Vorlegen des gekapselten Katalysators mit dem schnelleren Ansprechverhalten bei niedriger Temperatur in den porösen Isolationswerkstoff
- Gute Vakuumfestigkeit auch bei höherer Temperatur aufgrund des niedrigen Dampfdrucks der Komponenten
- Geringe Feuchteempfindlichkeit des Tränkharzes, da anhydridfrei
- Vereinfachte Prozessführung durch Wegfall der Anhydrid-Härterkomponente
- Verbesserte Umweltverträglichkeit

Die Erfindung betrifft ein Isolationssystem für elektrische Maschinen, insbesondere im Hochspannungsbereich. Das Isolationssystem hat als Härterkomponente eine thermisch aktivierbare Komponente oder eine verkapselte Komponente oder eine in den Poren des zu imprägnierenden Feststoffes eingelagerte Komponente.

## Patentansprüche

1. Isolationssystem für elektrische Maschinen einen festen und porösen Isolationswerkstoff und ein katalytisch und/oder thermisch härtbares Tränkharz umfassend, wobei das Tränkharz säureanhydridfrei ist und ein beliebiges Reaktionsharz mit Oxiranfunktionalitäten oder einer Mischung verschiedener Reaktionsharze mit Oxiranfunktionalitäten umfasst und im Isolationssystem mindestens eine thermisch aktivierbare und/oder gekapselte Härterkomponente vorliegt, die Härterkomponente ionische, also kationische oder anionische Polymerisation des Reaktionsharzes induziert und die Härterkomponente ausgewählt ist aus der Gruppe folgender Verbindungen: organische Salze, wie organische Ammonium-, Sulphonium-, Phosphonium-, Iodonium-, oder Imidazolium Salze, Metallkomplex-Verbindungen, tertiäre Amine, Imidazol-Verbindungen und/oder organische Heterocyclen.

2. Isolationssystem nach Anspruch 1, wobei die mindestens eine Härterkomponente zumindest teilweise in den Poren des festen Isolationswerkstoffes deponiert ist.

3. Isolationssystem nach Anspruch 1 oder 2, wobei die mindestens eine Härterkomponente zumindest teilweise thermisch aktivierbar und im Tränkharz gelöst ist.

4. Isolationssystem nach einem der vorstehenden Ansprüche, das einen Reaktivverdünner umfasst.

5. Isolationssystem nach einem der vorstehenden Ansprüche, das einen Reaktivverdünner in einer Menge von 0,01 bis 50 Gew% umfasst.

6. Isolationssystem nach einem der vorstehenden Ansprüche, wobei der Reaktivverdünner ausgewählt ist aus der Gruppe folgender Verbindungen: cyclische organische Carbonate, cyclische Ether, Diole und/oder Polyole.

7. Isolationssystem nach einem der vorstehenden Ansprüche, wobei die Anspringtemperatur der Härterkomponente, die Öffnungstemperatur für die Verkapselung und/oder die Temperatur für die Loslösung der Härterkomponente aus dem porösen Feststoff im Bereich von 35°C und 95°C insbesondere im Bereich von 50°C und 80°C liegt.

8. Verwendung eines Isolationssystems nach einem der Ansprüche 1 bis 7, das in einer elektrischen Spule eingesetzt wird.

## Claims

1. Insulation system for electrical machines, comprising a solid and porous insulating material and a catalytically and/or thermally curable impregnating resin, wherein the impregnating resin is acid anhydride-free and comprises any desired reactive resin having oxirane functionalities, or a mixture of different reactive resins having oxirane functionalities, and the insulation system comprises at least one thermally activatable and/or encapsulated hardener component, the hardener component induces ionic, i.e., cationic or anionic, polymerization of the reactive resin, and the hardener component is selected from the group of the following compounds: organic salts, such as organic ammonium, sulfonium, phosphonium, iodonium, or imidazolium salts, metal complex compounds, tertiary amines, imidazole compounds and/or organic heterocycles.

2. Insulation system according to Claim 1, wherein the at least one hardener component is deposited at least partially in the pores of the solid insulating material.

3. Insulation system according to Claim 1 or 2, wherein the at least one hardener component is at least partially thermally activatable and in solution in the impregnating resin.

4. Insulation system according to any of the preceding claims, which comprises a reactive diluent.

5. Insulation system according to any of the preceding claims, which comprises a reactive diluent in an amount of 0.01 to 50 wt%.

6. Insulation system according to any of the preceding claims, wherein the reactive diluent is selected from the group of the following compounds: cyclic organic carbonates, cyclic ethers, diols and/or polyols.

7. Insulation system according to any of the preceding claims, wherein the onset temperature of the hardener component, the opening temperature for the encapsulation and/or the temperature for the release of the hardener component from the porous solid is in the region of 35°C and 95°C, more particularly in the region of 50°C and 80°C.

8. Use of an insulation system according to any of Claims 1 to 7, which is employed in an electrical coil.

## Revendications

1. Système d'isolation pour machines électriques comportant un matériau d'isolation solide et poreux ainsi qu'une résine d'imprégnation catalytiquement et/ou thermiquement durcissable, la résine d'imprégnation étant exempte d'anhydride d'acide et comportant une résine réactive désirée ayant des fonctionnalités oxyrane ou un mélange de différentes résines réactives ayant des fonctionnalités oxyrane, le système d'isolation comportant au moins un composant durcisseur thermiquement activable et/ou encapsulé, le composant durcisseur induisant une polymérisation ionique, c'est-à-dire cationique ou anionique, de la résine réactive, et le composant durcisseur étant choisi dans le groupe comportant les composés suivants : des sels organiques tels que les sels organiques d'ammonium, de sulfonium, de phosphonium, d'iodonium ou d'imidazolium, des composés de complexes métalliques, des amines tertiaires, des composés d'imidazole et/ou des hétérocycles organiques.

2. Système d'isolation selon la revendication 1, dans lequel l'au moins un composant durcisseur est déposé au moins partiellement dans les pores du matériau d'isolation solide.

3. Système d'isolation selon la revendication 1 ou 2, dans lequel l'au moins un composant durcisseur est au moins en partie thermiquement activable et dissous dans la résine d'imprégnation.

4. Système d'isolation selon l'une des revendications précédentes comportant un diluant réactif.

5. Système d'isolation selon l'une des revendications précédentes comportant un diluant réactif dont la quantité est comprise entre 0,01 et 50 % en poids.

6. Système d'isolation selon l'une des revendications précédentes, dans lequel le diluant réactif est choisi dans le groupe comportant les composés suivants : les carbonates organiques cycliques, les éthers cycliques, les diols et/ou les polyols.

7. Système d'isolation selon l'une des revendications précédentes, dans lequel la température de démarrage du composant durcisseur, la température d'ouverture d'encapsulation et/ou la température de détachement du composant durcisseur de la matière solide poreuse dans une gamme comprise entre 35°C et 95°C, notamment dans une gamme comprise entre 50°C et 80°C.

8. Utilisation d'un système d'isolation selon l'une des revendications 1 à 7 qui est utilisé dans une bobine électrique.
